# EUROPÄISCHE PATENTSCHRIFT

(11) **EP 1 378 595 B1**
(45) Veröffentlichungstag und Bekanntmachung des Hinweises auf die Patenterteilung: **12.09.2007**
(21) Anmeldenummer: 03466013.4
(22) Anmeldetag: 02.07.2003
(51) Int. Cl.: D02G 1/00, B29B 17/00, C08J 11/00, D04H 1/42, D04H 3/00

(54) **Methode der Produktion der Textilien aus Aramidfasern**
Process for producing textiles from aramid fibers
Méthode de fabrication de textiles à partir de fibres d' aramide

(43) Veröffentlichungstag der Anmeldung: 07.01.2004
(73) Patentinhaber: Lykotex Slovakia, s.r.o., 094 35 (SK)
(72) Erfinder: Cerny, Milos, 664 61 Brno (CZ)
(74) Vertreter: Caslava, Frantisek

(56) Entgegenhaltungen:
- WO-A-02/40766
- WO-A-03/000976
- WO-A-03/056080
- US-A- 5 481 864
- US-A- 6 037 282
- US-B1- 6 212 738
- US-B1- 6 378 179

## Beschreibung

### Technikbereich

Die Erfindung betrifft die Methode der Produktion von Textilien aus Aramidfasern und Anlagen zur Durchführung dieser Methode.

### Bisheriger Stand der Technik

Bei der Produktion von Textilien aus Aramidfasern, sowohl gewebten, gestrickten oder ungewebten, Garnen und Vliesen, und dies mit 100% Anteil oder nur Teilanteil an Aramidfasern, werden bislang vorwiegend neue Stoffe verwendet, neue Aramidfasern, da die Technologie der Wiederverarbeitung des Textilabfalls aus Aramidfasern oder aussortierten Erzeugnissen aus den Textilien aus Aramidfasern ohne Zugabe von neuen, unbenutzten Fasern oder anderen Materialien, z.B. von Bindemittel, wurde bislang ganzheitlich noch nicht gelöst und beschrieben.

Falls das Recyclingmaterial, der Textilabfall aus Aramidfasern und/oder aussortierte Produkte aus Textilien aus Aramidfasern verwendet sind, geschah es dann bisher mit Zumischung neuer Stoffe - neuer Aramidfasern, oder anderer synthetischen oder Naturfasern, wie es z.B. bei der Wiederverwendung des Textilabfalls nach Erfindung WO 03/056080 A (Priorität am 25. 10. 2. 001 US) ist. Zu den zerschnittenen Stückchen des Recyclingstoffes werden die Stapelfasern gegeben und diese Mischung wird zum Band und weiter zum Garn verarbeitet. Es werden zum Endprodukt die gewebten Textilien. In dieser Anmeldung wird jedoch die Produktionsmethode von Textilien aus dem Aramidabfall ohne Zugabe von neuen Materialien nicht ganzheitlich gelöst.

Nach anderen bekannten Lösungen, die z.B. in der Patentanmeldung WO 03/000976 A1 angeführt sind, bei Recycling der Textilien aus hochwertigen Fasern, wie z.B. die Aramidfasern sind, bilden den überwiegenden Teil dieser Textilien die Fasern in Länge von 0,1 bis 12mm, eventuell von 0,1 bis zu 1,5mm, wenn es sich jedoch im Wesentlichen um den Abfallstaub von diesen Textilien handelt. Dieser verarbeitete Staubtextillabfall selbst, ist im Wesentlichen nicht imstande, eine kompakte Faser bei weiterer Verarbeitung zu bilden, diese großenteils Staubteile zueinander zu binden und deswegen wird bei diesem Recyclingprozess von Abfalltextilien das Bindemittel verwendet. Falls es in der angeführten Patentanmeldung über die Recyclingmethode solcher Textilien ohne das erwähnte Bindemittel gesprochen wird, ist das Verfahren in dieser Anmeldung bei dieser Produktionsmethode gar nicht mehr näher beschrieben. Es wird nur die Zugabe von anderer Materialart angeführt, als die Aramidfasern sind, mit Rücksicht darauf, falls das Bindemittel bei einem ungewebten Aramidstoff nicht verwendet ist, ist es damit gemeint, dass der Stoff die synthetischen Fasern mit einem niedrigen Schmelzpunkt nicht enthält. Diese Anmeldung löst ebenfalls nur das Recycling mit Zugabe von einer anderen Art des Materials.

Das Recycling von Textilmaterialien löst ebenfalls die Erfindung patentgemäß Nr. 5, 481, 874 US, dieses befasst sich jedoch nur mit Materialien, welche die Wollen, Baumwollen, Denim, Schneidemohair, Kaschmirhaar u.ä, bilden. Es beschreibt kein Textillabfallrecycling aus.

Aramidfaser und / oder aussortierten Produkten aus Textilien aus Aramidfasern, also aus den Fasern mit außergewöhnlichen Eigenschaften, vor allem im Hinblick auf die Zugfestigkeit, geringe Dehnbarkeit, den Wärme- und Chemikalienwiderstand. Überdies werden zu den Recyclingmaterialien bei Verarbeitung in einer bestimmten Menge neue, unbenutzte Naturfasern gegeben.

Dieser Stand ist vor allem durch außergewöhnliche mechanische Eigenschaften der Aramidfasern gegeben, insbesondere durch ihre außergewöhnliche Festigkeit im Zug und geringe Dehnbarkeit. Diese Eigenschaften haben Schwierigkeiten beim Öffnen der Faser aus Aramidtextilien bei der Wiederaufbereitung zur Folge.

Die bisher bei der Recyclingsart der Verarbeitung vom Abfall der klassischen, natürlichen oder synthetischen Textilien und Erzeugnissen aus diesen klassischen Textilien bekannten Technologien und Verfahren haben bisher nicht ihre direkte Anwendung für die Verarbeitung von Abfällen aus Textilien aus Aramidfasern oder aus Textilien mit einem Anteil an Aramidfasern oder Wiederaufbereitung der Erzeugnisse aus Aramidtextilien, wie z.B. Vorhänge, Tapeten, Schutzbekleidung oder ihrer Teile, Filter, Fallschirme und anderen ermöglicht.

Aramide sind beständig gegen Wasser, UV-Strahlung, gegen Oxidations-, Reduktions-, saure und auch alkalische Umgebung. Sie sind gleichzeitig widerstandsfähig gegen den Angriff von Bakterien, Schimmel und Pilzen.

Die Abfälle aus Aramidmatenalien werden deswegen auch durch Verbrennung in den Müllverbrennungsanlagen bei hohen Temperaturen um 1500°C oder durch Ablagerung auf die Deponien entsorgt.

Beide angeführte Entwertungsmethoden sind jedoch umweltfeindlich, unökonomisch und vor allem beeinflussen sie ungünstig die Umwelt. Ebenfalls wird die in die Aramidmaterialien bei ihrer Produktion hineingebrachte Energie nicht ausgenutzt. Die Verbrennung dieser Abfälle, die unter hohen Temperaturen erfolgt, ist nicht nur energetisch, sondern auch investitionsaufwendig was die Anschaffung von geeigneten Verbrennungsanlagen betrifft.

Die Benutzung von neuen Aramidfasern ist jedoch teuer und erzeugungstechnisch und energetisch anspruchsvoll. Die Materialien aus Aramidfasern sind strategische Materialien und sind nicht immer in erforderlicher Menge erreichbar.

### Grundlage der Erfindung

Die obenstehend angeführten Mängel werden wesentlich durch die technische Lösung nach der Erfindung beseitigt, deren Grundlage darin besteht, dass zur Produktion der Textilien aus Aramidfasern entweder Textilabfall aus Aramidfasern und/oder aussortierten Textilien aus Aramidfasern benutzt werden, die in Teile geteilt werden, vorzugsweise mit dem Ausmaß, mindestens in einer Richtung, im Bereich von 5 mm bis zu 300mm, wobei
(a) die Teile durch Hacken in Hackmasse geteilt werden,
(b) die Hackmasse in eine Mischkammer eingelagert wird, wo ihre Befeuchtung und Mischung durchgeführt wird und wo sie abgelegen wird,
(c) die befeuchtete, abgelegene Hackmasse aus der Mischkammer zur Öffnung in die Raufmaschine geführt wird, aus der sie als geöffnete Hackmasse herauskommt,
(d) die geöffnete Hackmasse zur weiteren Öffnung in den Öffner eingeführt wird,
(e) wonach die Masse aus dem Öffner in die Vorratskammer geführt wird, wo ihre Befeuchtung erfolgt,
(f) die befeuchtete geöffnete Hackmasse uas der Vorratskammer in die Krempel geführt wird, in der sie zu Kunstwolle verarbeitet wird und
(g) die erhaltene Kunstwolle weiter zum Vlies und/oder Garn verarbeitet wird

Die Lösung nach der Erfindung ermöglicht den Textilabfall aus Aramidfasern und /oder aussortierte Erzeugnisse aus Textilien aus Aramidfasern zu recyclieren. Sie ermöglicht weiter, dass es zur Produktion von neuen Textilien aus Aramidfasern die Aramidfasern verwendet werden, die ausschließlich durch Recyclung nach der Erfindung gewonnen sind.

Durch die Lösung nach der Erfindung werden vor allem Einsparungen von neuen Aramidfasern erzielt, die im Grunde ein strategisches Material und nicht immer in erforderlicher Menge erreichbar und teuer sind. Durch die Wiederverwendung der recycelten Aramidfasern werden auch die in ihre Produktion eingebrachten Kosten und Energie gespart. Durch die Wiederverwendung dieser Materialien entfällt ihre Entsorgung in den Verbrennungsanlagen oder durch Ablagerung auf die Deponien, was wiederum sehr günstig die Umwelt beeinflusst.

Die aus wiederverwerteten Aramidfasern erzeugten Textilien haben fast gleiche physikalische und chemische Eigenschaften wie die aus neuen Fasern erzeugten Textilien und sie können im Grunde für alle gewebten oder nicht gewebten Textilien benutzt werden. In einigen Fällen ist es jedoch zweckmäßig, zu den wiederverwerteten Aramidfasern ein neues Material aus Aramidfasern zuzugeben. Meistens geschieht es in Form von Stapelfasern.

Die Trennung in Teile von dem Ausmaß, mindestens in einer Richtung, im Bereich von 5 mm bis zu 300 mm sichert die Erhaltung der Mindestlänge der Fasern, die noch ihre Verarbeitung zu Textilien ermöglicht, beim Erzielen ihrer erwarteten Qualität und Eigenschaften, vor allem Festigkeit. Das MaximaIausmaB eines Teiles ist durch die Möglichkeiten der technologischen Anlage begrenzt, die noch, möglichst leicht die Öffnung der Fasern des verarbeiteten Textilabfalls ermöglicht.

Alle höher angeführten Vorteile nach dieser Erfindung sind durch einen Komplex von Merkmalen nach dem Anspruch 1 gegeben.

Vorzugsweise erfolgt die Teilung der Teile des Textilabfalls durch Hacken auf Hackmasse, durch gleichlaufende, linienformige, in einer Richtung hintereinander im Abstand folgende Hiebe Gleichlaufende, linienförmige in einer Richtung hintereinander im Abstand folgende Hiebe sichern, nach weiterer Öffnung der Teile des verarbeiteten Textilabfalls, die Möglichkeit. Fasern von passenden und geforderten Längen zu gewinnen, die für die nächste gewählte Methode der Produktion von. Textilien und für die Sicherung ihrer gewünschten Eigenschaften nötig sind.

Nach einer weiteren bevorzugten Methode beträgt der Abstand der einzelnen Hiebe hintereinander im Bereich von 5 mm bis zu 300 mm, dies ermöglicht es, die genannten Forderungen an eine passende Länge der Fasern am besten zu erfüllen.

Nach einer weiteren bevorzugten Methode erfolgt die Trennung des Textilabfalls auf Hackmasse durch schrittweise hintereinander folgende Hiebe in zwei voneinander verschiedenen Richtungen, dies erleichtert die Öffnung der Hackmasse in weiteren Vorgangsweisen.

Die Durchführung der Hiebe schrittweise in zwei voneinander senkrechten Richtungen sichert es besser, nach der Öffnung des Textilabfalls die Fasern von gewünschter Länge zu bilden, mit Minimierung der Fasern von Längen, die nicht für weitere Verarbeitung für Textilien geeignet sind, vor allem zu kurzen Fasern.

Nach einer weiteren bevorzugten Methode erfolgt die Bildung der Hackmasse durch abwechselnd hintereinander folgende Hiebe mindestens in zwei unterschiedlichen Ebenen, dadurch wird die Produktion der Hackmasse rationalisiert. Die Durchführung der Hiebe abwechselnd hintereinander in zwei voneinander senkrechten Ebenen ermöglicht weiter den Textilabfall zu Fasern von gewünschten und passenden Längen zu öffnen. Nach einer weiteren bevorzugten Methode, erfolgt die Durchführung der abwechselnd hintereinander folgenden Hiebe in zwei voneinander verschiedenen Ebenen durch ein Werkzeug, das die Durchführung von mindestens zwei Hieben gleichzeitig vereinigt, dadurch ist die Produktionsmethode rationeller

Die Benutzung des Folgewerkzeuges fährt zur weiteren Effektivitätssteigerung der Trennung des verarbeiteten Textilabfalls auf Hackmasse.

Nach einer weiteren Methode, erfolgt die Benutzung der Fallhackmaschine zur Trennung des Textilabfalls eignet sich vor allem aus der Sicht der Preiserreichbarkeit der Fallhackmaschinen und ihrer einfachen Bedienung und Wartung.

Bevorzugt ist die Benutzung der Rotationshackmaschine. Dies Bevorzugt ist eine mehr effektivere methode der Trennung des Textilabfalls auf Hackmasse. Die Rotationshackmaschinen sind, im Vergleich zu den Fallhackmaschinen, leistungsfähiger, mit niedrigerem Energieverbrauch. Bei ihnen entfällt der Übergang von der Rotations- zu der Translationsbewegung.

Bevorzugt ist die Durchführung der Befeuchtung der Hackmasse durch eine Emulsion des Spicköls im Wasser nicht nur aus der technologischen, sonder auch aus der ökonomischen Sicht Die Spicköle sind verhältnismäßig gut finanziell erreichbar. Durch ihre Benutzung wird größere Nachgiebigkeit der Hackmassenfasern erzielt und ihre Öffnung und Lösung erleichtert, und dies bei günstigen ökonomischen Kosten für die Emulsion.

Nach der nächsten Methode, ist die Menge des Spicköls in der Emulsion im Bereich von 1% bis zu 10% des Inhalts die optimale technologische Menge, die für möglichst einfache Öffnung und Lösung der Hackmasse erforderlich ist

Bevorzugt ist die Menge der Befeuchtungsflüssigkeit bis zu 25% des Gesamtgewichts der befeuchteten Hackmasse, sie ist die bestmögliche erforderliche Menge, die die Öffnung und Lösung der Hackmasse erleichtert und ermöglicht.

Nach der nächsten Methode, wird die in der Misch- und Lademaschine geöffnete Hackmasse in ein homogeneres Gebilde gemischt und zum Einlass in weitere Maschine geführt, die den Bestandteil der Technciogiestraße für die Verarbeitung der Textilabfälle aus Aramidfasern bildet.

Nach der nächsten Methode, trägt eine weitere Befeuchtung der geöffneten Hackmasse in der Vorratskammer durch die Befeuchtungsflüssigkeit der Strukturierung der Fasern bei und erleichtert folgende Öffnung und Lösung der geöffneten Hackmasse. Als technologisch geeignet und was die Kosten betrifft, nicht besonders anspruchsvoll, eignet sich hierfür die Emulsion des Spicköls im Wasser, wobei experimental als passendsterAnteil 1% bis zu 10% des Inhalts des Spicköls in der Emulsion überprüft ist.

Nach der nächsten Experimentüberprüfung ist es günstig, wenn die Menge der Befeuchtungsflüssigkeit nicht 25% der Gesamtmenge der befeuchteten, geöffneten Hackmasse aus Aramidfasern übersteigt. Die Menge der Befeuchtungsflüssigkeit hängt ebenfalls von der Art und Strukturierung der Aramidfasern in dem verarbeiteten Textilabfall ab.

Die Ausstattung mit den Sägenüberzügen mindestens einer der Krempelwalzen ermöglicht, gegenüber der Ausstattung nur mit den Drahtbebezügen die Öffnung der geöffneten Hackmasse auf Kunstwolle aus Textilabfall auch so fester Fasern, wie der Aramidfasern.

Die Ausstattung von mindestens einer der Walze der Krempel bei mindestens einer der Trommel, mit Draht-, beziehungsweise Spitzen- und/oder Nadelbezug, mit Vorteil als Vorspinnkrempel, erleichtert, steigert die Effektivität und perfektioniert die Öffnung der Aramidfasern in der geöffneten Hackmasse auf Kunstwolle.

Durch Zugabe von neuem Material aus Aramidfasern in den verarbeiteten Textilabfall aus Aramidfasern wird eine höhere Qualität der Fasern oder Textilien erzielt, die bei der Recycling-Verarbeitung des Textilabfalls aus Aramidfasern nach dieser Erfindung gewonnen wurde. Als geeignet und meistens ganz genügend ist die Zugabe des neuen Materials bis zu 15% des Gewichts der Kunstwolle. Günstig ist die Zugabe des neuen Materials in Form von Stapelfasern, und zwar am Einlass in die Krempel.

Eine Sicherung der Fasernlänge in der Kunstwolle im Bereich von 5 mm bis zu 150 mm ist geeignet vor allem zum Erzielen guter Festigkeit der durch Wiederverwertung erzeugten Textilien und Garne aus Aramidfasern, was besonders durch die untere Mindestgrenze der Fasernlänge begrenzt ist. Die Einhaltung dieses experimentell überprüften Bereichs der Fasernlänge in der Kunstwolle ist ebenfalls aus dem Grund der Sicherung einer einfachen Verarbeitung des recycelten Textilabfalls aus Aramidfasern durch technologische Verfahren nach dieser Erfindung nötig.

Bei kürzeren Fasern in der Kunstwolle als 5 mm würden die recycelten Ausgaben geringere Festigkeit aufweisen. Längere Fasern in der Kunstwolle als 150 mm würden eine Zunahme von Schwierigkeiten bei der Recycling-Methode ihrer Verarbeitung verursachen.

Durch Einführung der Kunstwolle in die Vliesbildeanlage bekommt man an ihrem Ausgang Vlies.

Durch Einführung des Vlieses aus den recycelten Aramidfasern in die Nadelmaschine bekommt man an ihrem Ausgang nicht gewebte Textilien.

Falls sie auch einen Anteil an neuen Aramidfasern enthalten, von bekannter und garantierter Qualität, haben dann diese Textilien höhere, garantierte Qualität, besonders die Festigkeit und höheren Gebrauchswert, jedoch auch einen höheren Preis.

Durch die Einführung der Kunstwolle in die Einrichtung zur Bandproduktion gewinnt man ein Halbprodukt, durch dessen weitere, gewöhnliche Verarbeitung, die vor allem die Verarbeitung in den Feinspinnmaschinen auf Vorgarn und weiter in den Strecken- und Zwirnmaschinen einschließt, Garn für die Produktion von gewebten oder gestrickten Textilien erzeugt wird.

Durch die Benutzung eines antistatischen Präparats in der Befeuchtungsflüssigkeit beim Öffnen oder Lösen der Hackmasse oder der schon geöffneten Hackmasse wird die Wirkung von ungeeigneten Auswirkungen der statischen Elektrizität vermindert oder verhindert, die bei den angeführten Produktionsmethoden entsteht. Das antistatische Präparat beeinflusst günstig das Prozess der Öffnung und Rangierung der Fasern, besonders bei folgender Verarbeitung in der Krempel auf Kunstwolle.

Eine antistatische Abänderung der Aufgabebänder der Vliesbildeanlage verhindert weiter unerwünschte Wirkung der statischen Elektrizität auf die Fasern des geöffneten Textilabfalls und erleichtert somit die Strukturierung der Fasern zur Bildung des Vlieses

Durch die Einlagerung, Befeuchtung und Mischung der Hackmasse in der Mischkammer wird gleichmäßige Feuchtigkeit im ganzen Umfang der verarbeiteten Hackmasse gesichert. Die Befeuchtung der Hackmasse selbst erleichtert ihre weitere Öffnung und Lötung Die Zeit der Einlagerung der Hackmasse in der Mischkammer zwischen 5 bis 25 Stunden ist optimal sowohl aus der technologischen, als auch der ökonomischen Sicht. Die Zeitdauer der Einlagerung der Hackmasse hängt von der Stärke des verarbeiteten Textilabfalls, der Starke seiner Fasern und dem Umfang der Hackmasse ab,

### Industrieverwendbarkeit

Die Methode der Produktion von Textilien aus Aramidfasern nach der Erfindung kann vor allem für Recycling-Industrieveratbeitung besonders des Textilabfalls aus Aramidfasern genutzt werden, der zum Beispiel beim Nähen von Bekleidung aus Aramidfasern, und/oder aus aussortierten Erzeugnissen aus Textilien aus Aramidfasern entsteht.

## Patentansprüche

1. Methode zur Produktion von Textilien aus Aramidfasern, die sich **dadurch kennzeichnet, dass** zur Produktion der Textilien aus Aramidfasern entweder Textilabtall aus Aramidfasern und/oder aussortierten Textilien aus Aramidfasern benutzt werden, die in Teile geteilt werden, vorzugsweise mit dem Ausmaß, mindestens in einer Richtung, im Bereich von 5 mm bis zu 300mm, wobei
(a) die Teile durch Hacken in Hackmasse geteilt werden,
(b) die Hackmasse in eine Mischkammer eingelagert wird, wo ihre Befeuchtung und Mischung durchgeführt wird und wo sie abgelegten wird,
(c) die befeuchtete, abgelegene Hackmasse aus der Mischkammer zur Öffnung in die Raufmaschine geführt wird, aus der sie als geöffnete Hackmasse herauskommt,
(d) die geöffnete Hackmasse zur weiteren Öffnung in den Öffner eingeführt wird,
(e) wonach die Masse aus dem Öffner in die Vorratskammer geführt wird, wo ihre Befeuchtung erfolgt,
(f) die befeuchtete geöffnete Hackmasse aus der Vorratskammer in die Krempel geführt wird, in der sie zu Kunstwolle verarbeitet wird und
(g) die erhaltene Kunstwolle weiter zum Vlies und/oderGarn verarbeitet wird

2. Die Methode nach dem Anspruch 1, **die sich dadurch kennzeichnet, dass** die Teilung der Teile durch Hacken in Hackmasse durch parallel laufende linienförmige Hiebe, die in einer Richtung im Abstand hintereinander folgen.

3. Die Methode nach dem Anspruch 2, **die sich dadurch kennzeichnet, dass** der Abstand einzelner Hiebe im Bereich von 5mm bis 300mm hintereinander durchgeführt wird

4. Die Methode nach irgendeinem der Ansprüche 1 bis 3, **die sich dadurch kennzeichnet, dass** nach Trennung der Teile in Hackmasse durch in erster Richtung im Abstand hintereinander folgende Hiebe, die zweite Trennung durch im Abstand hintereinander in zweiter Richtung folgende Hiebe durchgeführt wird, die sich von der ersten unterscheidet, wobei mit Vorteil die erste und die zweite Richtung zueinander senkrecht sind.

5. Die Methode nach irgendeinem der Ansprüche 1 bis 3, **die sich dadurch kennzeichnet, dass** die Trennung der Teile durch Hacken in Hackmasse durch Hiebe durchgeführt wird, die abwechselnd hintereinander mindestens in zwei voneinander unterschiedlichen Ebenen folgen, mit Vorteil in zueinander senkrechten Ebenen.

6. Die Methode nach irgendeinem Anspruch 2, 3 und 5, **die sich dadurch kennzeichnet, dass** abwechselnd hintereinander folgende Hiebe, die in zwei voneinander unterschiedlichen Ebenen durchgeführt sind, werden mit einem die Durchführung mindestens von zwei Hieben gleichzeitig vereinigenden Werkzeug durchgeführt, mit Vorteil mit einem Folgewerkzeug.

7. Die Methode nach irgendeinem der Ansprüche 1 bis 6, **die sich dadurch kennzeichnet, dass** die Trennung der Teile durch Hacken in Hackmasse mit Hilfe der Fallbackmaschine durchgeführt wird.

8. Die Methode nach irgendeinem der Ansprüche 1 bis 6, **die sich dadurch kennzeichnet, dass** die Trennung der Teile durch Hacken in Hackmasse mit Hilfe der Rotationshackmaschine durchgeführt wird.

9. Die Methode nach irgendeinem der Ansprüche 1 bis 8, **die sich dadurch kennzeichnet, dass** die Befeuchtung der Hackmasse durch Flüssigkeit durchgeführt wird, die mindestens durch eine Emulsion von Spicköl im Wasser gebildet ist.

10. Die Methode nach dem Anspruch 9, **die sich dadurch kennzeichnet, dass** sich in der Emulsion das Spicköl im Umfang von 1% bis zu 10% des Inhalts befindet.

11. Die Methode nach dem Anspruch 9 oder 10, **die sich dadurch kennzeichnet, dass** die Menge der Befeuchtungsflüssigkeit nicht 25% der Gesamtmenge der befeuchteten Hackmasse übersteigt.

12. Die Methode nach irgendeinem der Ansprüche 1 bis 11, **die sich dadurch kennzeichnet, dass** die geöffnete Hackmasse aus der Raufmaschine, vor Einführung in den Öffner, in die Misch- und Lademaschine eingeführt wird.

13. Die Methode nach irgendeinem der Ansprüche 1 bis 12, **die sich dadurch kennzeichnet, dass** die geöffnete Hackmasse in der Vorratskammer durch eine Flüssigkeit befeuchtet wird, mit Vorteil, der mindestens von 1 % bis zu 10% der Umfangsemulsionen des Spicköls im Wasser gebildet ist.

14. Die Methode nach dem Anspruch 13, **die sich dadurch kennzeichnet, dass** die Menge der Befeuchtungsflüssigkeit nicht 25% der Gesamtmenge der geöffneten Hackmasse aus Aramidfasern in der Vorratskammer übersteigt.

15. Die Methode nach irgendeinem der Ansprüche 1 bis 14, **die sich dadurch kennzeichnet, dass** die Krempel die Krempelwalzen mit Sägenüberzügen versehen hat.

16. Die Methode nach irgendeinem der Ansprüche 1 bis 15, **die sich dadurch kennzeichnet, dass** in der Krempel mindestens eine Krempelwalze bei mindestens einer Trommel mit Spitzen- und/oder Nedelüberzug versehen ist, der als Vorspinnkrempel durchgeführt ist.

17. Die Methode nach irgendeinem der Ansprüche 1 bis 16, **die sich dadurch kennzeichnet, dass** zu dem Textilabfall aus Aramidfasern und/oder zu den aussortierten Erzeugnissen aus Textilien aus Aramidfasern, die in Form der Kustwolle verarbeitet sind, beim Einlass in die Krempel ein neues Material aus Aramidfasern in Form von Stapelfasern zugegeben wird, mit Vorteil bis zu 15% des Gewichts der Kunstwolle.

18. Die Methode nach irgendeinem der Ansprüche 1 bis 17, **die sich dadurch kennzeichnet, dass** die Kunstwolle Fasern von der Länge im Bereich von 5mm bis zu 150mm enthält.

19. Die Methode nach irgendeinem der Ansprüche 1 bis 18, **die sich dadurch kennzeichnet, dass** die Kunstwolle in die Vlisbildeanlage eingeführt wird, wo sie zu Vlies verarbeitet wird.

20. Die Methode nach irgendeinem der Ansprüche 1 bis 19, **die sich dadurch kennzeichnet, dass** das Vlies in die Nadelmaschine eingeführt wird, deren Endstufe nicht gewebte Textilien aus wiederverwerteten Aramidfasern sind, mit Vorteil, enthaltend der Anteil an neuen Aramidfasern.

21. Die Methode nach irgendeinem der Ansprüche 1 bis 18, **die sich dadurch kennzeichnet, dass** die Kunstwolle in die Anlage zur Bandproduktion geführt wird, das weiter in den Feinspinnmaschinen zum Vorgarn und folglich durch klassische gewöhnliche Produktionsvorgänge in den Zwirnmaschinen zum Garn und weiter auf Webstühlen zum Gewebe oder auf Strickmaschinen zum Gestrick verarbeitet wird.

22. Die Methode nach dem Anspruch 13 oder 14, **die sich dadurch kennzeichnet, dass** die Befeuchtungsflüssigkeit ein antistatisches Präparat enthält.

23. Die Methode nach dem Anspruch 19, **die sich dadurch kennzeichnet, dass** die Vlisbildeanlage die Aufgabebänder mit antistatischer Aufbereitung versehen hat.

24. Die Methode nach dem Anspruch 1 und / oder 9, **die sich dadurch kennzeichnet, dass** sich die befeuchtete und durchgemischte Hackmasse in der Mischkammer für den Zeitraum von 5 bis 25 Stunden abliegen lässt.

## Claims

1. Production process of textile fabrics made of aramid fibers are **characterized by** the fact that aramid fiber textile fabrics are made of textile fabrics waste of aramid fibers and/or discarded products made of aramid fibers which are divided into pieces particularly of 5mm to 300mm size, at least in one direction:
(a) pieces are cut into chips,
(b) chips are moved into a mixing chamber where they are moistened and blended and kept for some time,
(c) moistened chips from the mixing chamber are delivered into the shredding machine to be opened; from there they come out as the opened chipped material,
(d) the opened chipped material is delivered into the open whipper in order to continue further opening,
(e) the opened substance from the open whipper is delivered into the storage chamber where it is moistened,
(f) moistened opened chipped material is removed out of the storage chamber and delivered into the carding machine where it is processed in order to get reprocessed fibers
(g) and final reprocess fibers are further processed in order to get card end and/or thread.

2. Procedure in accordance with claim 1 is **characterized by** the fact that pieces are cut into chipped material via parallel linear cuts following one direction at intervals.

3. Procedure in accordance with claim 2 is **characterized by** the fact that intervals between individual following cuts are within 5 mm - 300 mm.

4. Procedure in accordance with any of 1 - 3 claims is **characterized by** the fact as follows: having divided the pieces into chipped material by cutting in one direction at intervals, another dividing is carried out at intervals in another direction which differs from the first one: the first and the other directions are perpendicular which is classified advantageous

5. Procedure in accordance with any of 1 - 3 claims is **characterized by** the fact that dividing pieces into chipped material is carried out via cuts which are alternately made at two different planes, at least, and are mutually perpendicular

6. Procedure in accordance with any of 2, 3 and 5 claims is **characterized by** the fact that alternately following steps carried out at two different planes are made with a tool able to couple two cuts together, a progressive tool is classified as an advantageous one.

7. Procedure in accordance with any of 1 - 6 claims is **characterized by** the fact that dividing pieces via cutting into chipped material is carried out with a drop cutter.

8. Procedure in accordance with any of 1 - 6 claims is **characterized by** the fact that dividing pieces via cutting into chipped material is carried out with a rotary cutter.

9. Procedure in accordance with any of 1 - 8 claims is **characterized by** the fact that chipped material moistening process is carried out via liquid - emulsion of lubricating oil in water.

10. Procedure in accordance with claim 9 is **characterized by** the fact that the emulsion contains 1 % up to 10 voluminous % of lubricating oil.

11. Procedure in accordance with claims 9or 10 is **characterized by** the fact that the volume of moistening liquid does not exceed 25 % of total weight of moistened chipped material.

12. Procedure in accordance with any of 1 - 11 claims is **characterized by** the fact that the opened chipped material from the shredding machine is first delivered into the mixing and loading machine, after that into the open whipper.

13. Procedure in accordance with any of 1 - 12 claims is **characterized by** the fact that the open chipped material is moistened via liquid in the storage chamber; the liquid consists of 1 % up to 10 voluminous % emulsion of lubricating oil in water at least.

14. Procedure in accordance with claim 13 is **characterized by** the fact that the moistening liquid volume does not exceed 25 % of total weight of opened chipped material made of aramid fibers in the storage chamber.

15. Procedure in accordance with any of 1 - 14 claims is **characterized by** the fact that the carding machine has organized rigid wires of card rollers.

16. Procedure in accordance with any of 1 - 15 claims is **characterized by** the fact that the carding machine has at least one carding roller at at least one cylinder equipped with a spike and/or needle cover which is arranged as a breast roller.

17. Procedure in accordance with any of 1 - 16 claims is **characterized by** the fact that at the carding machine input, a new material processed as staple fiber, up to 15 % of reprocessed fires weight, is added to the textile fabrics waste of aramid fibers and/or discarded products made of aramid textile fabrics fibers processed as reprocessed fibers.

18. Procedure in accordance with any of 1 - 17 claims is **characterized by** the fact that reprocessed fibers contain fibers within 5 mm - 150 mm length.

19. Procedure in accordance with any of 1 - 18 claims is **characterized by** the fact that reprocessed fibers are delivered into the web forming machine where it is processed in order to get a card end.

20. Procedure in accordance with any of 1 - 19 claims is **characterized by** the fact that the card end is delivered into the needle punching machine whose output is a non-woven fabric made of recycled aramid fibers which contains new aramid fibers.

21. Procedure in accordance with any of 1 - 18 claims is **characterized by** the fact that reprocessed fibers are delivered into the machine in order to get a sliver which is further processed in fine spinning machines to get roving; after that conventional production process continues, i.e. twisting machines produce thread, weaving looms produce weave or knitting machines produce knit work.

22. Procedure in accordance with claims 13 or 14 is **characterized by** the fact that moistening liquid contains antistatic agent.

23. Procedure in accordance with claim19 is **characterized by** the fact that the web forming machine belt feeder is treated with antistatic agent.

24. Procedure in accordance with claims 1 and/or 9 is **characterized by** the fact that moistened and blended chipped material is kept in the mixing chamber for 5 - 25 hours.

## Revendications

1. Le procédé de fabrication des textiles de fibres aramides est charactérizé par le fait, qu'ils sont utilizés soit les déchets des fibres aramides et/soit des produits de fibres aramides hors d'usage, qui sont coupés aux parts, spécialement de dimension au moins de 5 mm à 300 mm à une direction :
a. des parts sont coupés en morceaux
b. des morceaux sont déplacés dans la chambre de mélange, où des morceaux sont mouillés, mélangés et laisséz pour une période prolongée
c. des morceaux mouillés sont déplacéz de la chambre de mélange dans l'arracheuse pour ouvrir ; de l'arracheuse ils sortent comme un matériel ouvert et coupé
d. le matériel ouvert et coupé est introduit dans l'ouvreuse pour une ouverture ultérieur
e. le produit ouvert de l'ouvreuse est introduit dans le réservoir d'attente, où le produit ouvert est mouillé
f. le produit ouvert et mouillé de réservoir d'attente est introduit dans le cardeur où le produit ouvert est mouillé est procédé pour obtenir des fibres reproduites
g. des fibres reproduites obtenus sont ensuite traités au lainage et/ou le fil

2. Conformément à la revendication 1, le procédé est **caractérisé par le fait, que** des parts sont coupés en morceaux par des coupes linéares, parallèles et avec un intervalle et en sens uniforme.

3. Conformément à la revendication 2, le procédé est **caractérisé par le fait, que** les intervalles entre les coupes individuelles sont entre 5 mm - 300 mm.

4. Conformément à quelconque revendication 1-3, le procédé est **caractérisé par** les faits suivantes : quand les parts sont coupés en morceaux par des coupes linéares, parallèles et en intervalle et en sens uniforme, ils sont coupés de nouveau en intervalle et en un autre sens différent du premier sens; il est advantageux quand le premier sens et le deuxième sens de coupage sont perpandiculaires.

5. Conformément à quelconque revendication 1-3, le procédé est **caractérisé par le fait, que** le coupage des parts en morceaux doit être fait alternativement en deux planes différentes, mais perpandiculaires.

6. Conformément à quelconque revendication 2, 3 et 5, le procédé est **caractérisé** p a r le fait, que les pas successifs de coupage alternant sont faites en deux planes par un outil, qui est capable de faire deux coups simultanément ; il est advantageux d'utiliser un outil progressif.

7. Conformément à quelconque revendication 1 - 6, le procédé est **caractérisé par le fait, que** des parts sont coupés en morceaux par une guillotine.

8. Conformément à quelconque revendication 1 - 6, le procédé est **caractérisé par le fait, que** des parts sont coupées en matériel ouvert et coupé par un hache-paille (rotation).

9. Conformément à quelconque révendication 1 - 8, le procédé est **caractérisé par le fait, que** le matériel ouvert et coupé est mouillé d'émulsion liquide de huile de lubrification dans l'eau.

10. Conformément à revendication 9, le procédé est **caractérisé par le fait, que** cette émulsion contient 1% - 10% de huile de lubrification dans le volume.

11. Conformément aux révendications 9 ou 10, le procédé est **caractérisé par le fait, que** le volume d'émulsion est inférieur à 25% de la masse totale du produit ouvert et mouillé.

12. Conformément à quelconque revendication 1 - 11, le procédé est **caractérisé par le fait, que** le matériel ouvert et coupé par l'arracheuse est en premier lieu introduit dans la machine de mélange et de charge et après dans l'ouvreuse.

13. Conformément à quelconque revendication 1 - 12, le procédé est **caractérisé par le fait, que** le matériel ouvert et coupé est mouillé par un liquide dans le réservoir d'attente ; ce liquide contient au moins 1% - 10% de huile de lubrification dans le volume.

14. Conformément à la revendication 13, le procédé est **caractérisé par le fait, que** le volume d'émulsion liquide est inférieur inférieur à 25% de la masse totale du matériel ouvert et coupé, qui est fait des fibres aramides dans le réservoir d'attente.

15. Conformément à quelconque revendication 1 - 14, le procédé est **caractérisé par le fait, que** le cardeur a des scies petites organisées sur rouleaux de cardage.

16. Conformément à quelconque revendication 1 - 15, le procédé est **caractérisé par le fait, que** le cardeur a au moins un rouleau de cardage sur au moins un cylindre équipé de surface avec pointes/aiguilles, qui est arrangé comme un rouleau d'avant.

17. Conformément à quelconque révendication 1 - 16, le procédé est **caractérisé par le fait, que** le nouvel matériel de poids au maximum 15% des fibres reproduites en forme de fibranne est ajouté au déchet textile de fibres aramides et/ou aux produits de fibres aramides hors d'usage coupés quand ils entrent le cardeur.

18. Conformément à quelconque revendication 1 - 1 7, le procédé est **caractérisé par le fait, que** des fibres reproduites contiennent fibres de 5 mm à 15 mm de longueur.

19. Conformément à quelconque revendication 1 - 18, le procédé est **caractérisé par le fait, que** des fibres reproduites sont déplacés dans la machine de lainage, où elles sont procédées au lainage.

20. Conformément à quelconque revendication 1 - 19, le procédé est **caractérisé par le fait, que** le lainage passe dans la machine de piqûre, quelle produit le textile non-tissu de fibres aramides recyclées.

21. Conformément à quelconque revendication 1 - 18, le procédé est **caractérisé par le fait, que** le matériel ouvert et coupé entre dans le machine, qui produit le filet ; ce filet est procédé à cordon par métier à filer et ensuite il est procédé par des procédés classiques à tissure par des machines de retors, à tissu par métiers et à tricotage par des tricoteuses.

22. Conformément aux révendications 13 et 14, le procédé est **caractérisé par le fait, que** le liquide mouillant contient le composant antistatique.

23. Conformément à la revendication 19, le procédé est **caractérisé par le fait, que** la machine à création de lainage a le chargeur à chenilles avec le composant antistatique.

24. Conformément à la revendication 1 et/ou 9, le procédé est **caractérisé par le fait, que** le matériel coupé, mélangé et mouillé reste dans le réservoir d'attente de 5 à 25 heures.
